# EUROPEAN PATENT APPLICATION

(11) **EP 4 675 151 A1**
(43) Date of publication of application: **07.01.2026**
(21) Application number: 24186312.5
(22) Date of filing: 03.07.2024
(51) Int. Cl.: F17C 5/06

(54) **REFUEL SYSTEM AND METHOD OF REFUELLING A GAS STORAGE TANK**

(71) Applicant: Water Stuff & Sun GmbH, 85716 Unterschleissheim (DE)
(72) Inventor: Dias, Cláudio, Porto (PT); Santos, Tiago, Aveiro (PT)
(74) Representative: Grünecker Patent- und Rechtsanwälte PartG mbB

(57) **Abstract**

A refuel system (1) for a gas storage tank (3) comprising: a refuel chamber (2) which is configured to accommodate the gas storage (3) tank therein; an operation gas supply device (4) which is configured to supply the gas storage tank (3) with an operation gas. In order to improve the refuel operation, a pressure control unit (5) is provided which is configured to control a pressure difference between a pressure in the gas storage tank (3) and a pressure in the refuel chamber (2) to be equal or less than a predetermined difference pressure at least temporarily while the gas storage tank (3) is supplied with the operation gas.

## Description

The present invention relates to a refuel system for a gas storage tank, and a method of refuelling a gas storage tank.

WO 2007 032 741 A1 discloses a gas container in form of a spherical gas storage unit at least temporarily exposed to high pressure. It discloses a method for filling the gas into the gas container. Therein, the gas container is filled with the high pressure gas which consequently flows into the gas container.

Thus, the gas container has to withstand the high pressure from the inside at least during filling. Hence, there is a problem that the gas container can get damaged during filling. Further, it is not possible to use a low pressure case to surround the gas container if the high pressure is only applied during filling.

It is thus an object of the present invention to provide a refuel system which can refuel a gas container in an improved manner and which can be used with a low pressure case.

This object is achieved by a refuel system having the features of claim 1.

According to a first aspect, a refuel system for a gas storage tank is provided which comprises: a refuel chamber which is configured to accommodate the gas storage tank therein; an operation gas supply device which is configured to supply the gas storage tank with an operation gas; and a pressure control unit which is configured to control a pressure difference between a pressure in the gas storage tank and a pressure in the refuel chamber to be equal or less than a predetermined difference pressure at least temporarily while the gas storage tank is supplied with the operation gas.

According to this aspect, the gas storage tank can be accommodated in the refuel chamber which is pressure controllable. Thus, during refuel of the gas storage tank with the operation gas, a pressure difference can always be kept within the predetermined difference pressure. Hence, the structural loads on the gas storage tank as a gas container can be considerably reduced. This leads to an improved refuel system. The term "pressure" used herein refers to the static pressure if not otherwise specified.

In particular, at least during refuel, the pressure in the refuel chamber can be increased, preferably, simultaneously with increase of the pressure of the operation gas within the gas storage tank.

Further, also if the pressure in the gas storage tank is reduced, the pressure in the refuel chamber can be reduced accordingly.

It is to be noted that the pressure in the gas storage tank is preferably higher than in the refuel chamber within the predetermined difference pressure. However, it may be equal to or even lower than the pressure in the refuel chamber.

It is to be noted that the refuel chamber can comprise at least one mechanical press which is configured to press the gas storage tank directly. That is, a pressure application device such as a ram of the mechanical press contacts the gas storage tank and is pressed against the gas storage tank. The at least one mechanical press may have a die having the negative shape of the gas storage tank.

However, in particular, the refuel chamber may be filled with a pressurizing substance such as a gas, liquid, or solid medium, to which a pressure load is applied.

Preferably, the pressure control unit is configured to control the pressure in the refuel chamber in accordance with a supply amount of the operation gas and/or a pressure in the gas storage tank.

Thus, as the pressure control unit can receive information of the supply amount of the operation gas and a pressure in the gas storage tank, the pressure difference can be controlled more reliably.

According to a further aspect, the pressure control unit can comprise a pressurizing device configured to pressurize a pressurizing substance in the refuel chamber, preferably, the pressurizing device comprises a pressurizing substance supply device which is configured to supply the pressurizing substance to the refuel chamber.

Thus, a pressurizing substance can be pressurized in the refuel chamber in order to increase the pressure therein. Hence, the pressure difference can be kept within the predetermined range set by the predetermined difference pressure during refuel. In particular, the pressurizing substance supply device may increase the pressure by supplying the pressurizing substance to the refuel chamber if the pressurizing substance is a gas, or by applying pressure to an incompressible fluid such as a liquid. The pressurizing substance may be any kind of fluid or a solid medium.

The pressurizing device may also comprise a high pressure reservoir which includes the pressurizing substance at a high pressure, preferably the maximum pressure occurring during refuelling.

The pressurizing substance may surround substantially the entire gas storage tank. Thus, the structural loads can be reduced for substantially the entire gas storage tank.

Preferably, the pressurizing substance is different in aggregate state and/or material from the operation gas.

Hence, costs, efficiency, and safety can be improved. That is, the operation gas may be required to be a specific combustion gas with certain properties such as hydrogen which is easily inflammable. However, as the pressurizing substance is only required for pressure control, it can be selected in view thereof. For example, the pressurizing substance may be water, in liquid or gaseous form.

According to still another aspect, the pressure control unit may comprise at least one relief device configured to discharge an excess pressure with respect to the difference pressure to the outside of the refuel chamber.

Hence, in case an excess pressure is determined, the excess pressure can be reduced such that the predetermined difference pressure can be achieved. Further increase in the pressure difference can be avoided. The relief device may be provided to relieve an excess pressure on the refuel chamber side and/or on the gas storage tank side.

According to still another aspect, the pressure control unit may comprise a depressurizing device which is configured to reduce the pressure in the chamber, preferably, the depressurizing device comprises a chamber discharge device which is configured to discharge a pressurising substance from the refuel chamber. The depressurizing device may be configured to decrease the pressure in the refuel chamber simultaneously with a decrease in the gas storage tank.

Accordingly, even if the pressure in the gas storage tank is reduced, it can be reacted appropriately. In particular, the pressure in the refuel chamber can be prevented from being excessive with respect to the gas storage tank and can be reduced. The chamber discharge device can be part of or can be the same as the at least one relief device. Furthermore, by discharging the pressurizing substance to the outside, the system can be set ready for another refuel operation.

According to still another aspect, the pressure control unit may comprise a refuel chamber pilot passage which receives the pressure in the refuel chamber as chamber pilot pressure, and/or a gas storage tank pilot passage which receives the pressure in the gas storage tank as tank pilot pressure.

Thus, the respective pressure information can be used to control the pressure difference. Accordingly, the pressure information can be obtained in a simple manner. For example, the pilot pressure may set a valve aperture degree of a valve setting the flow amount of the pressurizing substance and/or the operation gas.

Alternatively and additionally, the pressure control unit may comprise an electronic control unit which is configured to receive inputs from a chamber pressure detection unit, configured to detect the pressure in the refuel chamber, and/or a tank pressure detection unit configured to detect the pressure in the gas storage tank.

According thereto, the pressure information can be readily provided to the electronic control unit. In turn, the electronic control unit can set a valve aperture degree of a valve setting the flow amount of the pressurizing substance and/or the operation gas. The pressure detection units each may be a pressure sensor converting the pressure signal into an electric signal. It may be of a Piezo-type for example.

According to sill another aspect, the pressure control unit may further comprise a tank discharge device, which is configured to discharge operation gas from the gas storage tank.

Accordingly, even if the pressure in the refuel chamber drops, for example, due to leakage from the refuel chamber, it can be reacted appropriately. The tank discharge device may be part of or may be the same as the at least one relief device. Furthermore, if the pressure in the tank increases suddenly due to misfire, tank content can be discharged to the outside for safety reasons.

According to still another aspect, the refuel system may further comprise the gas storage tank, wherein the gas storage tank comprises: a case surrounding a gas storage space; and at least one gas storage unit accommodated in the gas storage space and configured to exchange gas therewith, wherein the pressure in the gas storage tank is the pressure in the gas storage space.

In such a gas storage tank, gas can be exchanged between the gas storage space and the at least one gas storage unit. In other words, the operation gas may not only be stored in the gas storage space but also in the gas storage unit(s). Thus, during operation of the gas storage tank where it is coupled with a combustion device such as an engine or a fuel cell, the case may be used as a low pressure case, which has a lower pressure than the pressure in the gas storage unit(s). As such a case is only designed to withstand relatively small pressures, the refuel system of the present invention is particularly advantageous since the relatively high pressure occurs at least temporarily during refuel in the gas storage space in order to store the gas in the gas storage unit(s).

Preferably, the at least one gas storage unit has a spherical shape or a cylindrical shape.

Accordingly, the at least one gas storage unit(s) can reliably withstand the relatively high pressure.

According to still another aspect, the gas storage tank may have a non-spherical shape, preferably, a parallelepiped shape.

Hence, the gas storage tank may be easily manufactured. Furthermore, with such a shape, high pressure loads may cause significant deformations such that the present refuel system is advantageous. Furthermore, in combination with gas storage units, as described above, a large number thereof can be stored.

Preferably, the difference pressure is variable depending on the maximum design pressure. Alternatively or additionally, the difference pressure may be at maximum 10 bar, preferably at maximum 5 bar, even more preferably at maximum 2 bar.

Consequently, excessive deformation of the gas storage tank can be avoided more reliably. For example, the pressure control unit can receive an input specifying the maximum design pressure of the gas storage tank and set the difference pressure depending thereon.

Preferably, the operation gas is hydrogen.

Hydrogen can be stored at very high pressures such that by the present refuel system, excessive deformation can be reliably avoided.

Another aspect of the present invention relates to a method of refuelling a gas storage tank, the method comprising: accommodating the gas storage tank in a refuel chamber; supplying an operation gas to the gas storage tank; and pressure control of controlling a pressure difference between a pressure in the gas storage tank and a pressure in the refuel chamber to be equal or less than a predetermined difference pressure at least temporarily while the gas storage tank is supplied with the operation gas.

Accordingly, the same effects as in the aforementioned refuel system can be achieved. Of course, the method can be performed with a pressure control unit of any of the above aspects, preferably with the pressure control unit having an electronic control unit on which a programme conducting the method is running.

The above aspects will become more apparent by reading the following detailed description in combination with the annexed figures.
- Fig. 1: shows a schematic diagram of a refuel system according to the present invention.
- Fig. 2: shows a flow diagram of a method of refuelling a gas storage tank.

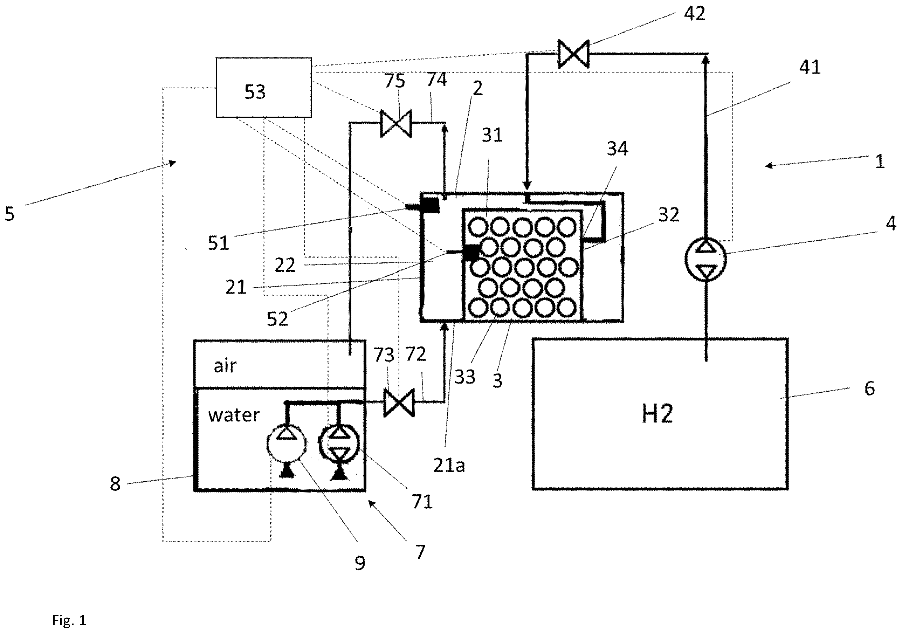

As can be taken from Fig. 1, the refuel system 1 of the present invention comprises a refuel chamber 2, a gas storage tank 3, an operation gas supply device 4, and a pressure control unit 5.

The refuel chamber 2 is a pressure tight chamber. That is, a casing 21 of the refuel chamber 2 is impermeable for a certain pressurizing substance such as a gas or a liquid. The refuel chamber 2 has a cylindrical shape, but can also have a parallelepiped shape. The casing 21 of the refuel chamber 2 may be formed of metal such as steel or of fiber reinforced plastic. The refuel chamber 2, that is, the casing 21 defines a pressurizing substance accommodation space 22 on the inside.

A gas storage tank 3 is supported and fixed on a bottom wall 21a of the refuel chamber 2. The casing 21 may have an opening through which the gas storage tank 3 is accommodated in the refuel chamber 2. The opening can be closed by a lid.

The gas storage tank 3 is a tank suitable for any operation gas, in particular, a combustion gas. The tank 3 may be filled with hydrogen gas or natural gas as operation gas, for example. The gas is stored in a gas storage space 31 which is surrounded by a case 32 having a non-spherical shape such as a parallelepiped shape. Furthermore, gas can be stored in a plurality of gas storage units 33 having a spherical shape. The gas storage units 33 are structured such as to exchange gas with the gas storage space 31. To this end, the gas storage units 33 may have at least one inlet valve (check valve) and at least one outlet valve (check valve, preferably a pressure assisted check valve) as described in WO 2007 032 741 A1, the features of which also contribute to the present invention in a preferable manner and are incorporated herein by reference. Furthermore, the gas storage units 33 may have a pressure regulator upstream of the outlet valve.

Gas can be stored into the gas storage units 33 via the gas storage space 31, in particular by raising the pressure therein such that the inlet valve of the at least one gas storage unit 33 opens. That is, the gas storage tank 3 is of such type that the gas storage units can be refuelled while being maintained in the gas storage space 31 and the case 32. If gas is discharged from the gas storage space 31, for example, to a combustion device on the outside, and the pressure in the gas storage space 31 lowers to a first predetermined pressure, the outlet valve may open such that gas from the gas storage unit 33 can flow into the gas storage space 31. If thereby, the pressure raises to another second predetermined pressure, the pressure regulator may block further outflow.

The case 32 defines the gas storage space 31 at its inner side. The case 32 and the gas storage space 31 have a parallelepiped shape with rounded corners or cylindrical shape. Furthermore, the gas storage tank 3 has a tank inlet 34 and a tank outlet (not shown). The gas storage tank 3 may have a stiffening structure which stiffens the case 32 through the gas storage space 31, for example, by interconnecting inner wall face parts of the case 32.

An operation gas supply device 4 is coupled to the gas storage tank 3 in order to supply the operation gas into the gas storage tank 3, that is, into the gas storage space 31. The operation gas supply device 4 comprises a rotary conveyance device such as a pump. Furthermore, an operation gas storage tank 6 is provided. The operation gas is supplied from the operation gas storage tank 6 to the gas storage tank 3 via a pipe system 41 and the pump 4. The pipe system 41 penetrates the casing 21 of the refuel chamber 2 in a fluid tight manner and is coupled to the inlet 34 of the gas storage tank 3 in a gas tight manner. An operation gas flow regulation valve 42 with a, preferably continuously, variable valve aperture degree is interposed between the operation gas supply device 4 and the gas storage tank 3.

The pressure control unit 5 comprises a chamber pressure detection unit 51 and a tank pressure detection unit 52, which are both configured as pressure sensors capable of acquiring a static pressure. The pressure detection units 51 and 52 are both coupled in a signal communicating manner with an electronic control unit 53. The electronic control unit 53 comprises a processor in order to perform a plurality of calculation processes. The electronic control unit 53 may perform the method of the invention in a fully automated manner when coupled with the respective physical entities.

Furthermore, the pressure control unit 5 comprises a pressurizing device 7. The pressurizing device 7 can pressurize a pressurizing substance, preferably a fluid, in the refuel chamber 2. The pressurizing device 7 has a pressurizing substance supply device 71 which comprises a rotary conveyance device such as a pump. Furthermore, a pressurizing substance storage tank 8 is provided in which a pressurizing substance such as liquid water is stored.

The pressurizing substance is supplied to a lower side (in particular, at a bottom wall) of the refuel chamber 2 via an inflow pipe system 72 and the pressurizing substance supply device 71. The inflow pipe system 72 is fluid tightly coupled to the refuel chamber 2. A pressurizing substance inflow regulation valve 73 is interposed between the pressurizing substance supply device 71 and the refuel chamber 2.

The refuel chamber 2 is coupled on an upper side (in particular, at the top wall) via an outflow pipe system 74 with the pressurizing substance storage tank 8. A pressurizing substance outflow regulation valve 75 is interposed between the refuel chamber 2 and the pressurizing substance storage tank 8.

It is to be noted that the operation gas supply device 4 and the pressurizing substance supply device 71 may be devices which can supply to and discharge from the tank 3 and the refuel chamber 2, respectively. They can also increase and decrease the respective pressure, preferably in a continuous manner. In other words, they form a tank discharge device and a chamber discharge device. Also, the pressurizing substance outflow regulation valve 75 can form a chamber discharge device.

The operation gas flow regulation valve 42 and the pressurizing substance inflow regulation valve 73 can regulate the flow rate therethrough, preferably in a continuous manner. The pressurizing substance outflow regulation valve 75 can be a check valve allowing flow only from the refuel chamber, or may be a continuous flow rate regulation valve.

Furthermore, the pressurizing device 7 here comprises a high pressure pressurizing device 9 such as a pump, which can pressurize the pressurizing substance with a high pressure. That is, the pressurizing substance supply device 71 here operates at a relatively low pressure, in particular, the atmospheric pressure, and at a high flow rate in order to fill the pressurizing substance into the chamber 2. When the chamber 2 is filled, the high pressure pressurizing device 9 increases the pressure of the pressurizing substance. Hence, the high pressure pressurizing device 9 operates at a relatively high pressure in order to increase the pressure inside the chamber 2.

A replacement fluid supply device which can supply a replacement fluid such as air to the refuel chamber in order to replace the pressurizing substance in the refuel chamber, for example, when the pressurizing substance is discharged from the chamber. The replacement fluid supply device may be an replacement fluid opening in the casing 21 of the refuel chamber 2 which is usually closed but opened at the time of discharge of the pressurizing substance. However, the replacement fluid supply device may also be formed by the outflow pipe system 74 and the pressurizing substance outflow regulation valve 75, if the latter allows flow into the chamber 2. For example, the outflow pipe system 74 may be connected to the atmosphere for supplying the replacement fluid.

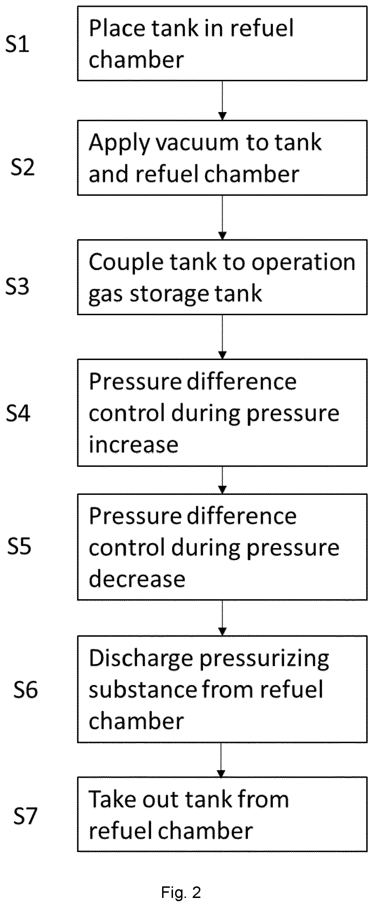

Functions and effects of the present invention will now be described by means of Fig. 2.

First, in a step S1, the gas storage tank 3 is placed in the refuel chamber 2. It is assumed that in this state the refuel chamber 2, that is, the pressurizing substance accommodation space 22 is filled with the replacement gas such as air. That is, the replacement fluid is a default fluid. Thus, the opening can be easily opened without leaking a liquid pressurizing substance.

Then, the various pipe systems 41, 72, and 74 can be removably attached in a fluid tight manner with the gas storage tank, but the attachment can also be permanent.

In a step S2, optionally, remaining air can be removed from the gas storage tank 3, in particular, the gas storage space 31, for example, by operating the operation gas supply device 4 such that air is sucked to the outside, and a vacuum is applied. Of course, in this state, the operation gas supply device 4 may not be coupled to the operation gas storage tank 6. In this state the operation gas flow regulation valve 42 is completely opened.

Optionally, at the same time, air can be discharged from the refuel chamber 2 via the pressurizing substance supply device 71, if it is a bidirectional pump, and at least one of the valves 73 and 75 is opened. However, if the vacuum is applied to the gas storage tank, it is not necessary to discharge the replacement gas from the refuel chamber 2.

In a next step S3, optionally, the operation gas flow regulation valve 42 is closed and the tank 3 is coupled to the operation gas storage tank 6 via the operation gas supply device 4. Also, the opened valve 73 or 75 can be closed, if air has been removed from the refuel chamber 2.

Subsequently, in a step S4, the operation gas supply device 4 supplies the operation gas such as hydrogen to the gas storage tank with the operation gas flow regulation valve 42 being opened. It is to be noted that the pressure inside the gas storage tank 3 may be increased continuously or not strict monotonuously. For example, the pressure may be increased stepwise at certain pressure intervals in order not to damage parts of the gas storage units 33.

At the same time, the pressurizing substance supply device 71 supplies the liquid, in particular, water, to the refuel chamber 2 with the pressurizing substance inflow regulation valve 73 being open. It is to be noted that at the beginning, the pressurizing substance outflow regulation valve 75 is also opened, in order to allow remaining air in the refuel chamber 2 to be discharged to the pressurizing substance storage tank 8.

When the refuel chamber 2 is completely filled with the pressurizing substance, the valve 75 is closed.

Then, in the refuel chamber 2 the pressure is continuously increased by the high pressurizing device 9 trying to supply more of the pressurizing substance to the refuel chamber. However, due to the incompressibility of the liquid, the applied energy of the high pressurizing device 9 is transformed into pressure inside the refuel chamber.

It is to be noted that the chamber pressure detection unit 51 and the tank pressure detection unit 52 continuously monitor the respective static pressures in the refuel chamber 2 and the gas storage tank 3, and feed a pressure signal to the electronic control unit 53. In Fig. 1, signal inputs and control outputs are shown as dashed lines. The electronic control unit 53 compares the pressure signals against each other and controls the operation gas supply device 4 and the pressurizing device 7 having the pressurizing substance supply device 71 and the high pressure pressurizing device 9 such that the pressure difference between the two entities is within a predetermined difference pressure, which can be stored on a storage unit of the electronic control unit, of, for example, 2 bar. The pressure in the gas storage tank 3 may thereby be higher than in the refuel chamber 2. For example, if the electronic control unit 53 determines that the pressure difference comes close to the predetermined difference pressure, it controls the device of the entity where the pressure is lower such that the pressure is increased therein. Alternatively or additionally, at least the valve 75 may be controlled by the electronic control unit 53 to be a relief device such that an excess pressure may be discharged from the refuel chamber 2 if the pressure in the refuel chamber 2 is higher than in the gas storage tank 3.

It is to be noted that during pressure increase in the gas storage tank 3, the pressure increases equally among the gas storage space 31 and the gas storage units 33.

In view of the foregoing, step S4 can be considered as pressure difference control step in which the pressure difference is controlled to be lower or equal than the predetermined difference pressure during increase of pressure in the tank.

The pressure increase in the gas storage tank 3 and in the chamber 2 may be controlled substantially simultaneously. For example, if the pressure inside the tank 3 is increased stepwise, also the pressure in the chamber 2 may be increased stepwise at the same intervals over time.

If the maximum pressure is achieved within the gas storage tank 3, that is, the gas storage units 33 are filled with the maximum design pressure, it may be necessary to discharge pressure from the gas storage space 31 to secure that the case 32 is a low pressure case don't burst. Of course, the pressure inside of the gas storage units 33 remains to be the maximum design pressure due to the valve system in the gas storage units 33.

In a step S5, the pressure in the gas storage space 31 is reduced, preferably continuously, by operating the operation gas supply device 4 such that it discharges operation gas from the gas storage tank 3 with the valve 42 being open or by continuously opening the valve aperture degree of valve 42. Hence, the valve 42 and/or the operation gas supply device 4 can be a tank discharge device.

In order to maintain the pressure difference control during pressure decrease, also the pressurizing device 7, in particular the high pressure pressurization device 9 can be controlled such that it reduces the pressure in the refuel chamber 2, preferably continuously. For example, the output of the high pressure pressurizing device 9 can be reduced. Alternatively, the valve 73 may be closed and a valve aperture degree of the valve 75 can be continuously increased such that the pressure in the refuel chamber 2 is reduced. Thus, the valve 73 and/or the pressurizing device are a depressurizing device. It is to be noted that during pressure increase and decrease, at least temporarily, preferably continuously, the pressure in the gas storage tank 3 may be higher than in the refuel chamber 2, while ensuring the predetermined difference pressure. The pressure decrease in the tank 3 and in the chamber 2 can also be performed simultaneously.

When the pressure in the gas storage tank 3 is reduced to the operation pressure which is the pressure supposed for use of the gas storage tank, the valve 42 is closed and operation of the operation gas supply device 4 is stopped in a step S6.

Further, the pressurizing substance is discharged from the refuel chamber by gravity and/or by the pressurizing substance supply device 71 operating in a discharge direction with the pressurizing substance inflow regulation valve 73 being open. Further, the replacement fluid opening can be opened such that the replacement fluid (a gas) is filled into the refuel chamber 2.

Then, in a step S7 the gas storage tank 3 can be taken out from the refuel chamber.

By means of the above presented system 1 and the method, it is possible to spare a gas storage tank during refuel as the structural loads can be reduced. The pressure difference control is not only performed during pressure increase in the gas storage tank but also during decrease. Thus, the tank 3 can be spared during the entire refuel to be ready for operation.

The pressure control unit 5 controls the pressure in the refuel chamber 2 based on the pressure in the gas storage tank 3. In other words, the target pressure in the refuel chamber is set in dependence of the pressure in the gas storage tank. That is, information is obtained regarding the pressure in the gas storage tank wherefore the pressure difference control can be performed more reliably. It is to be noted that the operation gas flow regulation valve 42 may be equipped with a flow rate meter and the flow rate of the operation gas (supply amount) may be used to control the pressure in the refuel chamber.

Here, the pressurizing substance outflow regulation valve 75 is controllable by the electronic control unit 53 and based on the pressure detection units 51 and 52 to be a relief device. Thus, excess pressure can be reliably discharged from the refuel chamber.

However, it is also possible to install the valve 75 such that it is coupled to a passage receiving the pressure within the gas storage tank 3. Thus, said passage can act as a pilot passage whereupon the valve opens if the pressure in the refuel chamber exceeds the pressure in the gas storage tank. Additionally, another valve may be provided to discharge the operation gas from the gas storage tank. Said valve may coupled to a passage receiving the pressure within the refuel chamber and the valve opens if the pressure in the gas storage tank exceeds the pressure in the refuel chamber. Then, the predetermined difference pressure may be zero.

However, there may be a biasing element such that the predetermined difference pressure is different from zero.

Alternatively, a valve may be provided which is coupled to two passages, namely one receiving pressure of the refuel chamber and the other receiving pressure of the gas storage tank, and the higher pressure is discharged.

In the above, the pressurizing device 7 comprises the pressurizing substance supply device 71 and the high pressure pressurizing device 9 such that each of these devices can be designed for its particular function of supplying the pressurizing substance and increasing the pressure, respectively. However, it can be dispensed with one of these devices. For example, the pressurizing device may only comprise the pressurizing substance supply device, if it is also capable of increasing the pressure. In an alternative embodiment, only the high pressure pressurizing device may be provided, if the chamber 2 is permanently filled with the pressurizing substance.

Alternatively, the the pressurizing substance supply device 71 and the high pressure pressurizing device 9 may not be coupled to the same tank such as tank 8. For example, the pressurizing device may comprise a high pressure reservoir such as a high pressure buffer tank. The high pressure reservoir may be pressurized by the high pressure pressurizing device, may include the pressurizing substance, and may be coupled in fluid coupling manner with the chamber via a pressure regulation valve. Hence, the pressure in the chamber can be finely controlled by the high pressure reservoir.

The pressurizing device may be a separate mechanical, electric, electromechanical, hydraulic, pneumatic, etc. actuator, which presses the inside of the casing 21 of the refuel chamber 2, that is the pressurizing substance, for example.

Also, the refuel chamber itself may be formed by at least one mechanical press, preferably a plurality of mechanical presses, which is configured to press the gas storage tank directly. In this case, the at least one mechanical press may have a die being the negative of the case of the gas storage tank. In this case, a pressurizing substance is not interposed between the chamber casing which is formed by the mechanical press and the gas storage tank. The pressure applied by the at least one mechanical press can be controlled by the pressure control unit. The pressure in the refuel chamber is the pressure applied by the at least one mechanical press. The mechanical press may be hydraulically, mechanically, and/or electrically driven.

It is preferable if the replacement fluid supply device is provided to the refuel system. However, it can be dispensed with such device.

The tank and the chamber discharge device may not be provided. The depressurizing device may not comprise the chamber discharge device, but can comprise an actuator expanding the refuel chamber.

The shape of the casing 21 of the refuel chamber has been specified to be cylindrical, but can be parallelepiped, or any other shape. The shape of the gas storage tank and the gas storage units may also vary. For example, the gas storage tank and the gas storage units may be cylindrical.

The supply devices such as the pressurizing substance supply device and the operation gas supply device can be provided in plurality. Also, they need not be a rotary conveyance device but can be a diaphragm, for example.

It is to be noted that at least one refuel chamber 2 and at least one operation gas supply device 4 may be provided. For example, a plurality of chambers 2 and a plurality of operation gas supply devices, respectively for each chamber 2, may be provided, wherein the pressure difference may be controlled for each chamber.

## Claims

1. A refuel system (1) for a gas storage tank (3) comprising:
a refuel chamber (2) which is configured to accommodate the gas storage (3) tank therein;
an operation gas supply device (4) which is configured to supply the gas storage tank (3) with an operation gas; and
a pressure control unit (5) which is configured to control a pressure difference between a pressure in the gas storage tank (3) and a pressure in the refuel chamber (2) to be equal or less than a predetermined difference pressure at least temporarily while the gas storage tank (3) is supplied with the operation gas.

2. The refuel system (1) according to claim 1, wherein the pressure control unit (5) is configured to control the pressure in the refuel chamber (2) in accordance with a supply amount of the operation gas and/or a pressure in the gas storage tank (3).

3. The refuel system (1) according to claim 1 or 2, wherein the pressure control unit (5) comprises a pressurizing device (7) which is configured to pressurize a pressurizing substance in the refuel chamber (2), preferably, the pressurizing device (7) comprises a pressurizing substance supply device (71) which is configured to supply the pressurizing substance to the refuel chamber (2).

4. The refuel system (1) according to claim 3, wherein the pressurizing substance is different in aggregate state and/or material from the operation gas.

5. The refuel system (1) according to any of the preceding claims, wherein the pressure control unit (5) comprises at least one relief device (75) configured to discharge an excess pressure with respect to the difference pressure to the outside of the refuel chamber (2).

6. The refuel system (1) according to any of the preceding claims, wherein the pressure control unit (5) comprises a depressurizing device which is configured to reduce the pressure in the chamber (2), preferably, the depressurizing device comprises a chamber discharge device (71) which is configured to discharge a pressurising substance from the refuel chamber (2).

7. The refuel system (1) according to any of the preceding claims, wherein the pressure control unit (5) comprises a refuel chamber pilot passage which receives the pressure in the refuel chamber (2) as chamber pilot pressure, and/or a gas storage tank pilot passage which receives the pressure in the gas storage tank (3) as tank pilot pressure.

8. The refuel system (1) according to any of the preceding claims, wherein the pressure control unit (5) comprises an electronic control unit (53) which is configured to receive inputs from a chamber pressure detection unit (51), configured to detect the pressure in the refuel chamber (2), and/or a tank pressure detection unit (52) configured to detect the pressure in the gas storage tank (3).

9. The refuel system (1) according to any of the preceding claims, wherein the pressure control unit (5) further comprises a tank discharge device (42), which is configured to discharge operation gas from the gas storage tank.

10. The refuel system (1) according to any of the preceding claims, further comprising:
the gas storage tank (3), wherein the gas storage tank (3) comprises:
a case (32) surrounding a gas storage space (31); and
at least one gas storage unit (33) accommodated in the gas storage space (31) and configured to exchange gas therewith,
wherein the pressure in the gas storage tank (3) is the pressure in the gas storage space (31).

11. The refuel system (1) according to claim 10, wherein the at least one gas storage unit (33) has a spherical shape or a cylindrical shape.

12. The refuel system (1) according to any of the preceding claims, wherein the gas storage tank (3) has a non-spherical shape, preferably, a parallelepiped shape.

13. The refuel system (1) according to any of the preceding claims, wherein the difference pressure is at maximum 10 bar, preferably at maximum 5 bar, even more preferably at maximum 2 bar.

14. The refuel system (1) according to any of the preceding claims, wherein the operation gas is hydrogen.

15. A method of refuelling a gas storage tank (3), the method comprising:
accommodating the gas storage tank (3) in a refuel chamber (2);
supplying an operation gas to the gas storage tank (3); and
pressure control of controlling a pressure difference between a pressure in the gas storage tank (3) and a pressure in the refuel chamber (2) to be equal or less than a predetermined difference pressure at least temporarily while the gas storage tank (3) is supplied with the operation gas.
